(19) **Europäisches Patentamt**

**European Patent Office**

**Office européen des brevets**

(11) **EP 0 695 016 B1**

(12) **EUROPEAN PATENT SPECIFICATION**

(45) Date of publication and mention
of the grant of the patent:
**13.09.2000 Bulletin 2000/37**

(51) Int. Cl.[7]: **H02H 9/00**, G06F 13/40,
G05F 1/46

(21) Application number: **94202223.7**

(22) Date of filing: **29.07.1994**

(54) **Current control interface circuit**

Stromsteuerungsschnitstellenschaltung

Circuit d'interface de commande de courant

(84) Designated Contracting States:
**BE DE ES FR GB IT NL SE**

(43) Date of publication of application:
**31.01.1996 Bulletin 1996/05**

(73) Proprietor:
**ALCATEL BELL**
**Naamloze Vennootschap**
**B-2018 Antwerpen 1 (BE)**
Designated Contracting States:
**BE DE ES FR GB IT NL SE**

(72) Inventor: **Maginelle, Wim**
**B-3020 Herent (BE)**

(74) Representative:
**Narmon, Gisèle Marie Thérèse et al**
**Alcatel Bell N.V.**
**Intellectual Property Department**
**Francis Wellesplein 1**
**2018 Antwerpen (BE)**

(56) References cited:
**EP-A- 0 423 885         EP-A- 0 444 569**
**US-A- 5 283 707**

• **IBM TECHNICAL DISCLOSURE BULLETIN,
vol.32, no.5B, October 1989, NEW YORK US
pages 407 - 408 'slow start circuit'**
• **IBM TECHNICAL DISCLOSURE BULLETIN,
vol.37, no.6B, June 1994, NEW YORK US pages
367 - 369 'scheme for low loss hot plugging and
fault protection in switch mode power'**

## Description

The present invention relates to a current control interface circuit interfacing between a power supply source and a load impedance which are able to be coupled across first and second supply terminals and first and second load terminals of said current control interface circuit, respectively, said second supply and load terminals being interconnected and said current control interface circuit including a variable impedance device which is coupled between said first supply and load terminals and has a control terminal coupled to said interconnected second supply and load terminals via a capacitance included in a capacitance charging and discharging circuit of which a charging part is operated upon an activating voltage being applied thereto, said charging and discharging circuit having a discharging part which includes a controlled discharge impedance device shunting said capacitance, said current control interface circuit further including a voltage detection circuit which is coupled between said first supply terminal and a control terminal of said discharge impedance device which is operated by a control voltage upon said voltage detection circuit detecting that a voltage at said first supply terminal is lower than a threshold voltage.

Such a current control interface circuit is already known in the art, e.g. from the published European Patent application EP A 423 885. Therein, the variable impedance device is an n-channel mosfet of which the source and the drain are coupled to the first supply and first load terminals, respectively. In this prior art document, the first load and supply terminals are carrying a voltage which is more negative than the one delivered by the interconnected second supply and load terminals. This seems to be in contrast to the situation which forms the object of the present invention, where the first supply and load terminals are at an electrical potential which is more positive with respect to the electrical potential delivered by the interconnected second supply and load terminals. In this latter case, as is also for instance mentioned in the US patent application US-A-5 283 707, the capacitor included in the charging and discharging circuit of the current control interface circuit, and intended to gradually turn on the variable impedance device, is coupled between the control terminal of this variable impedance device and the interconnected second supply and load terminals which are at the most negative potential. In the first mentioned prior art document however, where the first supply and load terminals are at the most negative potential, the capacitor gradually turning on the variable impedance device is to be coupled in between the control terminal of this variable impedance device and its source terminal. Therefore, although the capacitor of the first prior art document is not coupled between the control terminal and the second supply terminal, it is evident that, this prior art configuration may be considered as equivalent to the configuration as described in the pre-characterising portion of the claim 1 of the present invention, as is also known by a person skilled in the art.

In the first prior art document the capacitance charging and discharging circuit of which the capacitor forms part, further includes a current source in series with the capacitor, and consisting of prior art transistor F4 and prior art resistor R4 as can be observed from the figure of this prior art document. The discharging part of the capacitance charging and discharging circuit includes prior art transistor F2 constituting the controlled discharge impedance device which is shunting the capacitance. The charging part of the charging and discharging circuit is operated upon an activating voltage which is provided by coupling the second supply voltage terminal to the current source.

This prior art current control interface circuit is coupled between a dc power supply and a dc-dc converter. Its function is to intercept fast and frequently occurring failures of the power supply so as to prevent the dc-dc converter from malfunctioning during these power supply failures. An additional capacitor is shunting the dc-dc converter, this parallel circuit thereby corresponding to the load impedance as described in the non-characteristic part of the first claim of the present invention, the load impedance thereby being equivalent with the parallel connection of a load resistor and a load capacitor.

After switching on of the prior art power supply, the capacitance of the prior art current control interface circuit is gradually charged by the current source operated upon switching on the power supply delivering the activating voltage. The mosfet constituting the variable impedance device thereby gradually turns on and the value of the drain-to-source path impedance changes from high ohmic to low ohmic. The load capacitor is charged by the power supply source without a peak in the total load current through the load impedance. Indeed, the value of the drain-to-source path resistance of the variable impedance device controls the total load current. The load current is delivered by the power supply source supplying the system voltage across the first and second supply terminals. A peak in load current could cause a peak in voltage across an internal resistance of the power supply source delivering the current, thereby causing the system voltage supplied by the power supply source to drop under the minimum voltage needed for the system to function properly.

The prior art current control interface circuit further includes circuitry composed of a threshold circuit, denoted 3 in the figure of this prior art document, an output of which is coupled to a voltage divider composed of prior art resistors R2 and R6. An intersection point of this voltage divider is coupled to the input of an inverter composed of prior art transistor F3, and prior art resistors R5 and R9. This prior art threshold circuit, together with the prior art voltage divider and the prior art inverter, thereby is to be considered as equivalent to the voltage detection circuit described in pre-characterising portion of the claim 1 of the present invention. Indeed, if the voltage supplied by the prior art power supply suddenly drops below a certain threshold, the voltage at the second supply terminal drops and the voltage detection circuit operates the controlled discharge impedance device to turn on, thereby discharging the capacitance, i.e. by shunting the capacitance with a low resistance. In this way, the capacitance is discharged whereby the variable impedance device is brought in its high ohmic impedance condition. Hence, the variable impedance device is off and has a high ohmic drain-to-source path resistance when the supply voltage is raised again. Due to the high ohmic drain-to-source path resistance a peak in the total load current is avoided. It is to be remarked that in the prior art situation, where the first supply terminal is carrying the most negative potential, a voltage drop in between both supply terminals results either from a voltage drop at the second supply terminal or a voltage increase at the first supply terminal. As already explained in a previous paragraph of this document, the first supply terminal of the current control interface circuit of the present invention is carrying the most positive potential. The prior art voltage detection circuit is detecting a voltage drop at the second supply terminal, which by means of equivalence corresponds to a voltage detection circuit which is adapted to detect voltage drops at the first supply terminal of the current control interface circuit of the present invention.

According to the present invention, the current control interface circuit is used in an application board, to be plugged in a so called system board including system circuits as well as the power supply source which continuously supplies the system voltage across the first and second supply terminals. In this case the load impedance is permanently coupled to the current control interface circuit across the first and second load terminals. When the application board is plugged in (pulled out), the power supply source is coupled across (uncoupled from) the first and second supply terminals and the activating voltage is applied (taken away from) the charging and discharging device. During pulling out of the application board, the capacitance discharges by the operation of the shunting device, as was explained in a previous paragraph of this document. However, with the prior art current control interface circuit, the voltage between both supply terminals does not drop immediately after pulling out of the application board, and therefore the voltage detection circuit does not immediately provide the appropriate control voltage to turn on the controlled discharge impedance device. Indeed, at the moment when the power supply source is disconnected from the supply terminals, the mosfet constituting the variable impedance device is still on. Therefore the voltage between the supply voltage terminals only gradually decreases via discharging of the load capacitance through the load resistance. As a consequence the voltage detection circuit does not deliver the appropriate output for turning on the controlled discharge device. Thus even though the controlled discharge impedance device is able to quickly discharge the capacitance and as a result to quickly turn off the variable impedance device, its operation entirely depends on the detection, by the voltage detection circuit, of a voltage drop at the first supply terminal in the situation of the present invention. If this voltage is not sufficiently quickly dropping, the capacitance only discharges slowly. If the application board is afterwards plugged in again, the load capacitor has already been discharged but the capacitance may still be sufficiently charged for the mosfet constituting the variable impedance device to be on and thus have a low ohmic drain to source path resistance. The power supply source is thereby coupled to the uncharged load capacitor via the low impedance mosfet. This causes an unwanted peak load current due to the charging of the load capacitor and the system voltage drops under the minimum voltage needed for the system to function properly. In case the application board is often pulled out and subsequently plugged in again e.g. in order to fit the electrical contacts between the application board and the system board, this situation thus regularly occurs.

An object of the present invention is thus to provide a current control interface circuit of the above known type but wherein the above mentioned problem of a too slow discharge of the capacitance during pulling out of the board, is solved.

According to the invention this object is achieved by the fact that said variable impedance device is coupled to said first supply terminal via an inductor device.

In the presence of the inductor device, the voltage at the first supply terminal drops immediately after the system voltage source is uncoupled from the first and second supply terminals. Indeed, the current through the inductor acting as a current source, decreases and thus the voltage across the latter device becomes negative and the voltage at the first supply terminal drops almost immediately.

Another characteristic feature of the present invention is the fact that said voltage detection circuit includes an inverter circuit and a comparator circuit which compares said voltage at said first supply terminal with said threshold voltage, said inverter circuit inverting an output of said comparator circuit and supplying said control voltage to said control input of said discharge impedance device.

Suppose the comparator output is active high (inactive low) when the voltage at the first supply terminal is above (below) a threshold. Due to the inverter circuit the output of the voltage detection circuit is then active low (inactive high) when the voltage at the first supply terminal is above (below) the predetermined threshold.

An improvement of the present invention is the fact that said current control interface circuit includes a DC/DC converter circuit which is coupled to said first supply terminal and provides said activating voltage at its output which is coupled to said capacitance via a first resistance and to said inverter circuit.

In this way an external connection to provide the activating voltage e.g. with an auxiliary voltage source is avoided. Furthermore, the inverter is still provided with the voltage across the charged capacitance via the first resistance when the system voltage source is uncoupled from the first and second supply terminals and when the DC/DC converter circuit does not provide the activating voltage at its output.

Another characteristic feature of the present invention is the fact that said controlled discharge impedance device is constituted by an emitter to collector path of a first transistor of which a base is connected to said output of said inverter circuit which includes the series connection of a second resistance which is connected to said inverter output and of a second transistor of which a collector-to-emitter path shunts the base to emitter junction of said first transistor.

In this way, the inverter and the discharge impedance both include a fast switching component, i.e. the first and second transistor, in order to limit the delay between the detection of the voltage drop at the first supply terminal and the discharging of the capacitance.

Yet another characteristic feature of the present invention is the fact that said variable impedance device is a FET of which a gate is said control terminal and of which a drain-to-source path is coupled between said first supply and load terminals.

In this way, the capacitance does not discharge via the control terminal of the variable impedance device. Indeed, the gate input resistance of a FET is high ohmic.

The above mentioned and other objects and features of the invention will become more apparent and the invention itself will be best understood by referring to the following description of an embodiment taken in conjunction with the accompanying drawings wherein :

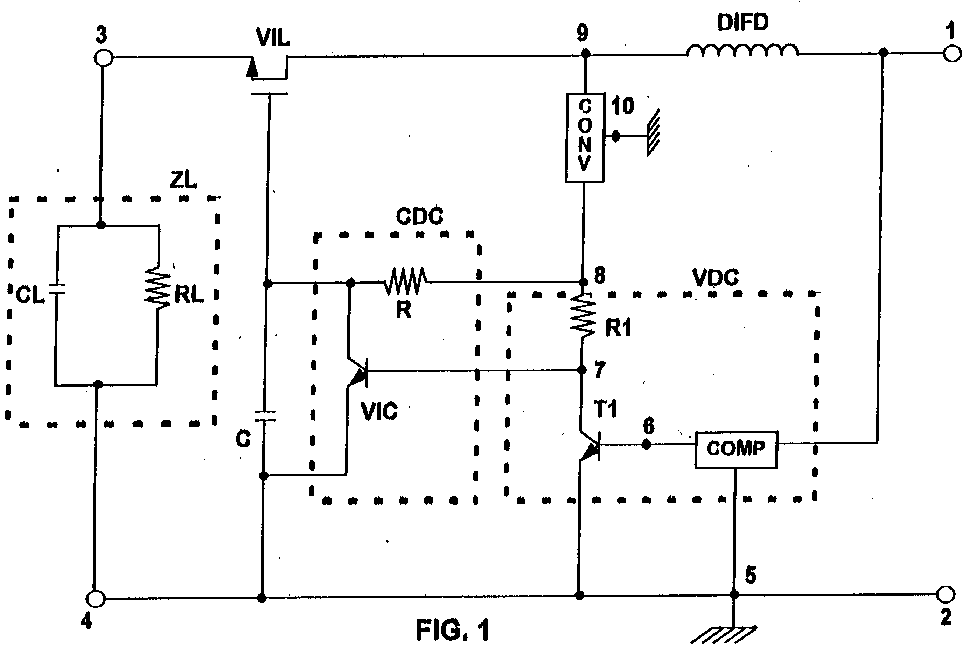

Fig 1 shows a current control interface circuit according to the invention; and
Fig 2 depicts a voltage comparator circuit COMP used in the latter circuit.

The current control interface circuit includes supply terminals 1 and 2 and load terminals 3 and 4. Terminals 1 and 3 are interconnected via the series connection of an inductor DIFD and the drain-to-source path of a mosfet VIL. Terminals 2 and 4 are connected to a common ground reference. A load impedance ZL constituted by the parallel connection of a load capacitor CL and a load resistor RL is coupled across the load terminals 3 and 4. A gate of VIL is connected to the common ground reference via a control capacitor C which is shunted by a charging and discharging circuit CDC. CDC includes a discharge transistor VIC shunting capacitor C with a collector-to-emitter path and CDC further includes a charge resistor R connecting the collector of VIC to the output terminal of a DC/DC converter circuit CONV which is connected to the common ground reference via a ground terminal 10 and of which an input terminal 9 is connected to the interconnection point between VIL and DIFD. The output terminal 8 of CONV is further connected to the common ground reference via the series connection of a resistor R1 and a collector-to-emitter path of a NPN transistor T1, R1 and T1 constituting an invertor circuit of which the output terminal 7 and input terminal 6 are the collector and a base of T1 respectively. The input terminal 6 of the invertor circuit, i.e. the base of T1, is connected to an output terminal of a comparator circuit COMP of which an input terminal is connected to the supply terminal 1. The COMP circuit further has a ground terminal 5 connected to the common ground reference. The cascade connection of the COMP circuit and the above invertor circuit constitutes a voltage detection circuit VDC which is connected to the common ground reference and has an input terminal connected to the supply terminal 1, an output terminal 7 and an auxiliary voltage supply terminal connected to the output terminal 8 of the CONV circuit.

The DC/DC converter CONV includes an integrated circuit MAXIM662, manufactured by Analog Devices and currently available on the market. In data sheets of the MAXIM662, the DC/DC converter is presented as a typical operating circuit using the latter integrated circuit. CONV is adapted to convert a voltage between 4,75 Volt and 5,5 Volt to a voltage of 12 Volt. It is to be noted that the output terminal of CONV is connected via an internal resistance path (not shown) to the common ground reference.

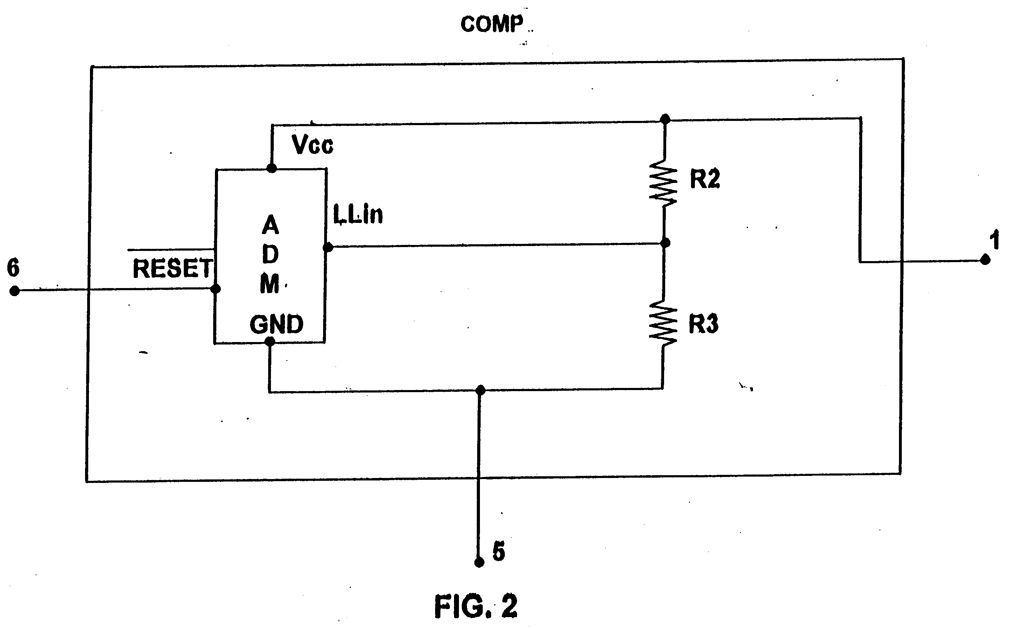

The comparator circuit COMP depicted in Fig 2 includes an integrated circuit MAXIM697 hereafter referred to as ADM, manufactured by Analog Devices and currently available on the market. ADM has a power supply input Vcc, a voltage sensing input LLin, a ground terminal GND and an output $\overline{RESET}$. The input terminal of COMP is connected to a power supply input Vcc of ADM and is further connected to the common ground reference via the series connection of resistors R2 and R3 constituting a voltage divider. The interconnection point of the latter resistors is connected to the voltage sensing input LLin of ADM. The ground terminal GND of ADM is connected to the common ground reference via the ground terminal 5 and the output $\overline{RESET}$ of ADM is the output terminal of COMP.

When the voltage at the input terminal 1 of COMP and therefore at Vcc, is higher than e.g. 3 Volt ADM is active and compares the voltage at LLin with an internal threshold of 1,3 Volt. When the voltage at Llin is higher (lower) than the above internal threshold, the voltage at the $\overline{RESET}$ output is e.g. 1 (0) volt. Suppose the voltage at the input terminal 1 is e.g. 5 Volt and that the voltage divider is designed so as to then have e.g. 1,3 Volt at LLin. The output voltage at $\overline{\text{RESET}}$ is then 1 Volt. When the voltage at the input terminal drops below 5 Volt, the voltage at LLin drops below 1,3 Volt and the output voltage at $\overline{\text{RESET}}$ is then 0 volt. The input voltage further decreases below 3 Volt and ADM becomes inactive with the output $\overline{\text{RESET}}$ remaining at 0 Volt. The operation of the current control interface circuit is now hereafter described :

It is assumed that both capacitors CL and C are fully discharged. When the power supply source of 5 Volt (not shown) is coupled across the supply terminals 1 and 2, the gate to source voltage of VIL is zero and therefore the drain-to-source resistance is high. The DC/DC converter is supplied with 5 Volt at its input terminal 9 via the inductor DIFD, and provides 12 Volt at its output terminal 8. In the voltage detection circuit VDC, the comparator circuit COMP has 5 Volt at its input terminal 1 and puts 1 Volt at its output terminal 7. In the invertor circuit of VDC, T1 is switched on and the output voltage of the invertor circuit, i.e. the voltage at the VDC output terminal 7, is low enough for the discharging transistor VIC to have a high collector-to-emitter path resistance. In this way the control capacitor C, when being charged up later, can not discharge via the discharge transistor VIC. The output voltage of the DC/DC convertor CONV is supplied to the control capacitor C via the charging resistor R, and the control capacitor C gradually charges up. The time constant of the R-C circuit is carefully designed for this purpose.

As the voltage at the gate of the mosfet VIL rises due to the charging of the control capacitor C, the gate to source voltage of VIL increases and VIL starts conducting i.e. the value of the drain-to-source path resistance gradually decreases from high ohmic to low ohmic as the control capacitor C charges up. The load capacitor CL is gradually charged up by the power supply source via the inductor DIFD and the drain-to-source path of the mosfet VIL. Consequently, the voltage at the first load terminal 3 i.e. the voltage at the source of the mosfet VIL, increases. Both the capacitors C and CL charge up until the gate to source voltage equals 7 Volt i.e. 12 Volt at the gate minus 5 Volt at the source. The mosfet VIL is on and has a low drain-to-source path resistance.

It is to be noted that several mosfets such as VIL may be connected in parallel to reduce the overall drain-to-source path resistance. Up to now the inductor DIFD had no influence on the operation of the circuit and may be considered as a short circuit due to the gradual change in current provided by the power supply source (not shown). When the power supply source is uncoupled from the supply terminals the characteristic operation of the current control interface circuit becomes clear.

When the power supply source is disconnected from the supply terminals 1 and 2, the mosfet VIL is still on and the inductor DIFD acting as a current source, pulls current out of the COMP circuit. The load capacitor CL starts to discharge via the load resistor RL and the voltage at the drain of VIL follows the voltage at the source of VIL via the drain-to-source path resistance which is still low. The voltage across the inductor DIFD is proportional to the change in current through the inductor. The latter current decreases and the voltage at first supply terminal 1 is thus pulled down by DIFD with respect to the voltage at the drain of VIL. As the voltage decreases at the first supply terminal 1, the output of the comparator circuit COMP becomes 0 volt as is described before. The transistor T1 of the invertor circuit is cut off, and the collector voltage i.e. the output of the invertor is pulled up by the 12 Volt across the charged control capacitor C via the resistors R and R1 to approximately 1 Volt which is the voltage across the base-to-emitter junction diode of the discharging transistor VIC. The discharging transistor VIC immediately switches on shunting the control capacitor C with a low collector-to-emitter path resistance. The control capacitor C discharges via the latter low path resistance and consequently the gate voltage of VIL decreases. The source voltage has also decreased as the load capacitor CL discharges and the gate-to-source voltage of VIL decreases. The control capacitor C discharges via the above collector-to-emitter path until the voltage across C drops below approximately 0,7 Volt. The base-to-emitter junction diode of VIC is thus blocked and the collector-to-emitter path resistance of VIC becomes high. At this point the power supply source may again be coupled across the supply terminals 1 and 2 because the gate-to-source voltage of VIL is small enough for the drain-to-source path resistance of VIL to be high. The control capacitor C may then discharge completely via the charging resistor R and the output terminal of CONV, which is connected via an internal resistance path to the common ground reference as mentioned above.

It is to be noted that a sudden system voltage drop will result in the same characteristic operation of the current control interface circuit.

While the principles of the invention have been described above in connection with specific apparatus, it is to be clearly understood that this description is made only by way of example and not as a limitation on the scope of the invention which is defined by the appended claims.

## Claims

1. Current control interface circuit interfacing between a power supply source and a load impedance (ZL) which are able to be coupled across first (1) and second (2) supply terminals and first (3) and second (4) load terminals of said current control interface circuit, respectively, said second supply and load terminals being interconnected and said current control interface circuit including a variable impedance device (VIL) which is coupled between said first supply and load terminals and has a control terminal coupled to said interconnected second supply and load terminals via a capacitance (C) included in a capacitance charging and discharging circuit (CDC) of which a charging part is operated upon an activating voltage being applied thereto, said charging and discharging circuit having a discharging part which includes a controlled discharge impedance device (VIC) shunting said capacitance, said current control interface circuit further including a voltage detection circuit (VDC) which is coupled between said first supply terminal and a control terminal (7) of said discharge impedance device which is operated by a control voltage upon said voltage detection circuit detecting that a voltage at said first supply terminal is lower than a threshold voltage characterised in that said variable impedance device (VIL) is coupled to said first supply terminal via an inductor device (DIFD).

2. Current control interface circuit according to claim 1 characterized in that said voltage detection circuit includes an inverter circuit (R1,T1) and a comparator circuit (COMP) which compares said voltage at said first supply terminal with said threshold voltage, said inverter circuit inverting an output (6) of said comparator circuit and supplying said control voltage to said control input (7) of said discharge impedance device.

3. Current control interface circuit according to claim 2 characterized in that said current control interface circuit includes a DC/DC converter circuit (CONV) which is coupled to said first supply terminal and provides said activating voltage at its output (8) which is coupled to said capacitance via a first resistance (R) and to said inverter circuit.

4. Current control interface circuit according to claim 2 characterized in that said controlled discharge impedance device is constituted by an emitter to collector path of a first transistor (VIC) of which a base is connected to said output (7) of said inverter circuit which includes the series connection of a second resistance (R1) which is connected to said inverter output and of a second transistor (T1) of which a collector-to-emitter path shunts the base to emitter junction of said first transistor (VIC).

5. Current control interface circuit according to claim 1 characterized in that said variable impedance device (VIL) is a FET of which a gate is said control terminal and of which a drain-to-source path is coupled between said first supply and load terminals.

## Patentansprüche

1. Stromsteuerungs-Schnittstellenschaltung, welche eine Schnittstelle zwischen einer Stromversorgungsquelle und einer Lastimpedanz (ZL) bildet, die über einen ersten (1) und einen zweiten (2) Versorgungsanschluß bzw. einen ersten (3) und einen zweiten (4) Lastanschluß der Stromsteuerungs-Schnittstellenschaltung angeschlossen werden können, wobei die zweiten Versorgungs- und Lastanschlüsse miteinander verbunden sind und die Stromsteuerungs-Schnittstellenschaltung eine Variabel-Impedanz-Vorrichtung (VIL) beinhaltet, die zwischen den ersten Versorgungs- und den ersten Lastanschluß geschaltet ist und deren Steueranschluß an den zweiten Versorgungs- und den zweiten Lastanschluß, die miteinander verbunden sind, angeschlossenen ist, und zwar über eine Kapazität (C), welche in einer Kapazitanz-Lade- und Entladeschaltung (CDC) enthalten ist, deren Ladeteil betrieben wird, wenn eine Aktivierungsspannung an diesen angelegt ist, wobei die Lade- und Entladeschaltung einen Entladeteil besitzt, welcher eine gesteuerte Entlade-Impedanzvorrichtung (VIC) beinhaltet, die zu dieser Kapazität parallel geschaltet ist, und die Stromsteuerungs-Schnittstellen schaltung weiter eine Spannungserfassungsschaltung (VDC) beinhaltet, welche zwischen den ersten Versorgungsanschluß und einen Steueranschluß (7) der Entlade-Impedanzvorrichtung geschaltet ist, die durch eine Steuerspannung betrieben wird, wenn die Spannungserfassungsschaltung erfaßt, daß eine Spannung am ersten Versorgungsanschluß niedriger ist als eine Schwellenspannung, dadurch gekennzeichnet, daß die Variabel-Impedanz-Vorrichtung (VIL) über eine Induktionsvorrichtung (DIFD) an den ersten Versorgungsanschluß angeschlossen ist.

2. Stromsteuerungs-Schnittstellenschaltung nach Anspruch 1, dadurch gekennzeichnet, daß die Spannungserfassungsschaltung eine Inverter-Schaltung (R1, T1) und eine Komparatorschaltung (COMP) beinhaltet, welche die Spannung am ersten Versorgungsanschluß mit der Schwellenspannung vergleicht, wobei die Inverter-Schaltung einen Ausgang (6) der Komparatorschaltung invertiert und die Steuerspannung dem Steuereingang (7) der Entlade-Impedanzvorrichtung zuführt.

3. Stromsteuerungs-Schnittstellenschalwng nach Anspruch 2, dadurch gekennzeichnet, daß die Stromsteuerungs-Schnittstellenschaltung eine Gleichstrom-Wandlerschaltung (CONV) beinhaltet, welche an den ersten Versorgungsanschluß angeschlossen ist und die Aktivierungsspannung an ihrem Ausgang (8) liefert, der an die Kapazität über einen ersten Widerstand (R) und an die Inverterschaltung angeschlossen ist.

**4.** Stromsteuerungs-Schnittstellenschaltung nach Anspruch 2, dadurch gekennzeichnet, daß die gesteuerte Entlade-Impedanzvorrichtung durch eine Emitter-Kollektor-Strecke eines ersten Transistors (VIC) gebildet ist, dessen Basis mit dem Ausgang (7) der Inverter-Schaltung verbunden ist, welche eine Serienschaltung von einem mit dem Inverter-Ausgang verbundenen zweiten Widerstand (R1) und einem zweiten Transistor (T1) beinhaltet, dessen Kollektor-Emitter-Strecke parallel zur Basis-Emitter-Strecke des ersten Transistors (VIC) geschaltet ist.

**5.** Stromsteuerungs-Schnittstellenschaltung nach Anspruch 1, dadurch gekennzeichnet, daß die Variabel-Impedanz-Vorrichtung (VIL) ein FET ist, dessen Gate der Steueranschluß ist und dessen Drain-Source-Strecke zwischen den ersten Versorgungs- und den ersten Lastanschluß geschaltet ist.

**Revendications**

**1.** Circuit d'interface de commande de courant réalisant l'interface entre une source d'alimentation et une impédance de charge (ZL) qui sont capables d'être respectivement couplées entre une première (1) et une deuxième (2) bornes d'alimentation et une première (3) et une deuxième (4) bornes de charge dudit circuit d'interface de commande de courant, lesdites deuxièmes bornes d'alimentation et de charge étant interconnectées et ledit circuit d'interface de commande de courant comportant un dispositif d'impédance variable (VIL) qui est couplé entre lesdites premières bornes d'alimentation et de charge et comporte une borne de commande couplée auxdites deuxièmes bornes d'alimentation et de charge interconnectées par l'intermédiaire d'une capacité (C) incluse dans un circuit de charge et de décharge (CDC) de capacité dont une partie de charge est actionnée lorsqu'une tension d'activation y est appliquée, ledit circuit de charge et de décharge possédant une partie de décharge qui comporte un dispositif d'impédance de décharge commandé (VIC) qui shunte ladite capacité, ledit circuit d'interface de commande de courant comportant en outre un circuit de détection de tension (VDC) qui est couplé entre ladite première borne d'alimentation et une borne de commande (7) dudit dispositif d'impédance de décharge qui est actionnée par une tension de commande lorsque ledit circuit de détection de tension a détecté que la tension de ladite première borne d'alimentation est inférieure à une tension de seuil, caractérisé en ce que ledit dispositif d'impédance variable (VIL) est couplé à ladite première borne d'alimentation par l'intermédiaire d'un dispositif inducteur (DIFD).

**2.** Circuit d'interface de commande de courant selon la revendication 1, caractérisé en ce que ledit circuit de détection de tension comporte un circuit inverseur (R1, T1) et un circuit comparateur (COMP), qui compare ladite tension sur ladite première borne d'alimentation à ladite tension de seuil, ledit circuit inverseur inversant la sortie (6) dudit circuit comparateur et délivrant ladite sortie de commande (7) à ladite entrée de commande dudit dispositif d'impédance de décharge.

**3.** Circuit d'interface de commande de courant selon la revendication 2, caractérisé en ce que ledit circuit d'interface de commande de courant comporte un circuit convertisseur continu-continu (CONV) qui est couplé à ladite première borne d'alimentation et délivre ladite tension d'activation sur sa sortie (8) qui est couplée à ladite capacité par l'intermédiaire d'une première résistance (R) et audit circuit inverseur.

**4.** Circuit d'interface de commande de courant selon la revendication 2, caractérisé en ce que ledit dispositif d'impédance de décharge commandé est constitué par le chemin émetteur-collecteur d'un premier transistor (VIC) dont la base est connectée à ladite sortie (7) dudit circuit inverseur qui comporte la connexion en série d'une deuxième résistance (R1) qui est connectée à ladite sortie de l'inverseur et d'un deuxième transistor (T1) dont le chemin collecteur-émetteur shunte la jonction base-émetteur dudit premier transistor (VIC).

**5.** Circuit d'interface de commande de courant selon la revendication 1, caractérisé en ce que ledit dispositif d'impédance variable (VIL) est un FET dont la grille est ladite borne de commande et dont le chemin drain-source est couplé entre lesdites premières bornes d'alimentation et de charge.

FIG. 1

EP 0 695 016 B1

FIG. 2